## Europäisches Patentamt

## European Patent Office

## Office européen des brevets

(19)

(11) Veröffentlichungsnummer: **0 031 118**

A2

(12)

# EUROPÄISCHE PATENTANMELDUNG

(21) Anmeldenummer: 80107911.2

(22) Anmeldetag: 15.12.80

(51) Int. Cl.³: **H 02 M 5/45**
**H 02 M 1/06**

(30) Priorität: 24.12.79 DE 2952323

(43) Veröffentlichungstag der Anmeldung:
01.07.81 Patentblatt 81/26

(84) Benannte Vertragsstaaten:
AT BE CH FR GB IT LI NL SE

(71) Anmelder: BROWN, BOVERI & CIE Aktiengesellschaft
Mannheim
Kallstadter Strasse 1
D-6800 Mannheim Käfertal(DE)

(72) Erfinder: Moll, Klaus, Dipl.-Ing.
Lorscher Ring 16c
D-6710 Frankenthal(DE)

(72) Erfinder: Schulze, Helmut, Dipl.-Ing.
Heyerstrasse 7
D-6105 Ober-Ramstadt(DE)

(74) Vertreter: Kempe, Wolfgang, Dr. et al,
c/o Brown, Boveri & Cie AG Postfach 351
D-6800 Mannheim 1(DE)

(54) Verfahren zum Antakten eines Stromrichters mit Phasenfolgelöschung.

(57) Zum Antakten eines drei- oder mehrphasigen Stromrichters (SR) mit Phasenfolgelöschung, der mit einem eingeprägtem Zwischenkreisstrom ($I_a$) gespeist wird, wird der Zwischenkreisstrom ($I_d$) zunächst auf kleine Werte begrenzt und die Taktfrequenz auf ihren von der Steuerung vorgebbaren Maximalwert erhöht. Sobald die Spannung an den Kommutierungskondensatoren ($C_K$) eine ausreichende Höhe erreicht hat, wird der Zwischenkreisstrom ($I_d$) zeitverzögert auf den Anfahrwert erhöht und anschließend die Taktfrequenz nach einer Zeitfunktion auf die optimale Anfahrfrequenz reduziert.

Fig.1

Verfahren zum Antakten eines Stromrichters mit Phasenfolgelöschung.

Die Erfindung betrifft ein Verfahren zum Antakten eines
drei- oder mehrphasigen Stromrichters in Brücken- oder
Mittelpunktschaltung mit Phasenfolgelöschung, der einen
mittels eines Gleichstromstellers bzw. gesteuerten Gleichrichters und einer Zwischenkreisdrossel erzeugten eingeprägten Gleichstrom einem elektrischen Verbraucher in der
Weise zuführt, daß dort ein drei- oder mehrphasiges Wechselstromsystem gebildet wird.

Ein derartiger Stromrichter ist aus der Zeitschrift "Proc.
IEE", Vol. 111, No. 8, Aug. 1964, Seiten 1423 bis 1434,
insbesondere Figur 12 oder aus "ETZ-A", Bd. 96, 1975, H. 11,
Seiten 520 bis 523 bekannt. Das Verhalten derartiger Wechselrichterschaltungen mit Phasenfolgelöschung wird in diesen Literaturstellen ausführlich erläutert.

665/79         - 2 -         **0031118**

Der zur Speisung des Stromrichters erforderliche eingeprägte Gleichstrom wird von einer Einspeisung über eine
Zwischenkreisdrossel geliefert. Die Einspeisung kann entweder als selbstgeführter Stromrichter, wenn die Speisung
aus einem Wechsel- oder Drehstromnetz erfolgt, oder als
Gleichstromsteller, wenn die Speisung aus einem Gleichspannungsnetz erfolgt, ausgebildet sein.

Beim Betrieb einer solchen Stromrichterschaltung werden
die Ventile, d.h. die Thyristoren des selbstgeführten Wechselrichters, mit nahezu rechteckförmigen Stromblöcken belastet, deren Länge einem Drittel der Periodendauer der
Ausgangsfrequenz entspricht.

Das Löschen der einzelnen Ventile erfolgt beim Zünden des
jeweiligen Folgeventils in der gleichen Kommutierungsgruppe.
Dies wird als Phasenfolgelöschung bezeichnet. Die für die
Löschung erforderliche Kommutierungsenergie wird von den
in der jeweiligen Kommutierungsgruppe zwischen den Phasen
angeordneten Kommutierungskondensatoren bereitgestellt.
Die Kommutierungskondensatoren laden sich während des
stationären Betriebes ohne zusätzliche Maßnahmen auf.

Beim Einschalten des Wechselrichters besitzen die Kommutierungskondensatoren i. a. keine Ladung. Sie müssen deshalb vor Beginn des Stromrichterbetriebs aufgeladen werden. Zu diesem Zweck weisen die bisher bekannten Einrichtungen eine gesonderte Spannungsquelle auf, die über Widerstände und Dioden an die Kommutierungskondensatoren angekoppelt ist und die die Kommutierungskondensatoren auf
die erforderliche Kommutierungsspannung auflädt. Die
Dioden entkoppeln während des Stromrichtersbetriebs die
externe Aufladeeinrichtung von den Kondensatoren.

Der vorliegenden Erfindung liegt die Aufgabe zugrunde, ein Verfahren anzugeben, welches es ermöglicht, ohne Verwendung von zusätzlichen Schaltungskomponenten im Starkstromteil des Stromrichters die zum Löschen der Ventile benötigte Spannung auf den Kommutierungskondensatoren zu erzeugen.

Diese Aufgabe wird dadurch gelöst, daß zunächst der Wechselrichter mit erhöhter Frequenz getaktet und gleichzeitig der eingeprägte Zwischenkreisstrom auf einen kleinen Wert begrenzt wird und daß anschließend der eingeprägte Zwischenkreisstrom auf den gewünschten Anfahrstromwert erhöht und die Taktfrequenz des Wechselrichters auf die optimale Anfahrfrequenz reduziert wird, sobald die Spannung an den Kommutierungskondensatoren eine ausreichende Höhe erreicht hat.

Die Erfindung macht von der Tatsache Gebrauch, daß beim Einschalten des Stromes an der Impedanz des an den Stromrichter angeschlossenen Verbrauchers ein Spannungsabfall entsteht, der eine Aufladung der Kommutierungskondensatoren ermöglicht. Dieser Spannungsabfall ist abhängig vom Verhältnis der resultierenden Streuinduktivität des Verbrauchers und der Zwischenkreisinduktivität, sowie dem maximalen Wert der vor der Zwichenkreisdrossel anliegenden Zwischenkreisspannung. Da dieser Spannungsabfall relativ klein ist, ist auch die Kommutierungsspannung klein und kann deshalb nur einen kleinen Ventilstrom löschen. Dem wird durch die Begrenzung des Zwischenkreisstroms Rechnung getragen. Die Spannung an der Impedanz des Verbrauchers hat infolge der im Stromkreis liegenden Induktivitäten und Kapazitäten einen etwa sinusförmigen Verlauf. Es ist deshalb wichtig, das folgende Ventil in dem Augenblick zu zünden, in dem die Spannung ihr Maximum erreicht hat. Dem wird durch die erhöhte Taktfrequenz Rechnung getragen.

Gemäß einer vorteilhaften Weiterbildung wird der Wechselrichter mit der höchsten Frequenz angetaktet, die die Wechselrichtersteuerung erzeugen kann. Wechselrichter und Steuerung sind so dimensioniert, daß die Zündung des nachfolgenden Ventils dann erfolgt, wenn die Spannung am Kommutierungskondensator gerade ihr Maximum durchläuft.

Während des Antaktens wird der Zwischenkreisstrom vorzugsweise auf einen Wert begrenzt, der geringfügig oberhalb der Lückgrenze liegt. Auf diese Weise wird im Zwischenkreis ein kontinuierlicher Stromfluß erreicht, der einerseits eine fortlaufende Steigerung der Kondensatorspannung ermöglicht, andererseits aber auch eine Löschung des gerade leitenden Ventils durch die in den Kondensatoren gespeicherte Ladung ermöglicht.

Nach Erreichen einer ausreichenden Spannung auf den Kommutierungskondensatoren wird vorteilhafterweise der Zwischenkreisstrom zeitverzögert erhöht, bis er den gewünschten Anfahrstrom erreicht. Mit dem Ansteigen des Zwischenkreisstromes steigt gleichzeitig die Spannung an den Kommutierungskondensatoren an.

Gemäß einer bevorzugten Weiterbildung wird die Taktfrequenz nach einer Zeitfunktion reduziert, sobald der Zwischenkreisstrom den Anfahrstromwert erreicht hat. Auf diese Weise wird sichergestellt, daß auch bei niedrigen Frequenzen ein sicherer Stromrichterbetrieb möglich ist.

Eine Beschleunigung des Antaktens wird dadurch erreicht, daß die Erhöhung des Zwischenkreisstromes und die Reduzierung der Taktfrequenz gleichzeitig erfolgen. Dabei muß jedoch durch geeignete Maßnahmen sichergestellt werden, daß immer die nötige Kommutierungsspannung auf den Kondensatoren vorhanden ist.

Anhand der Zeichnungen soll die Erfindung in Form eines Ausführungsbeispieles näher erläutert werden.

Es zeigen:

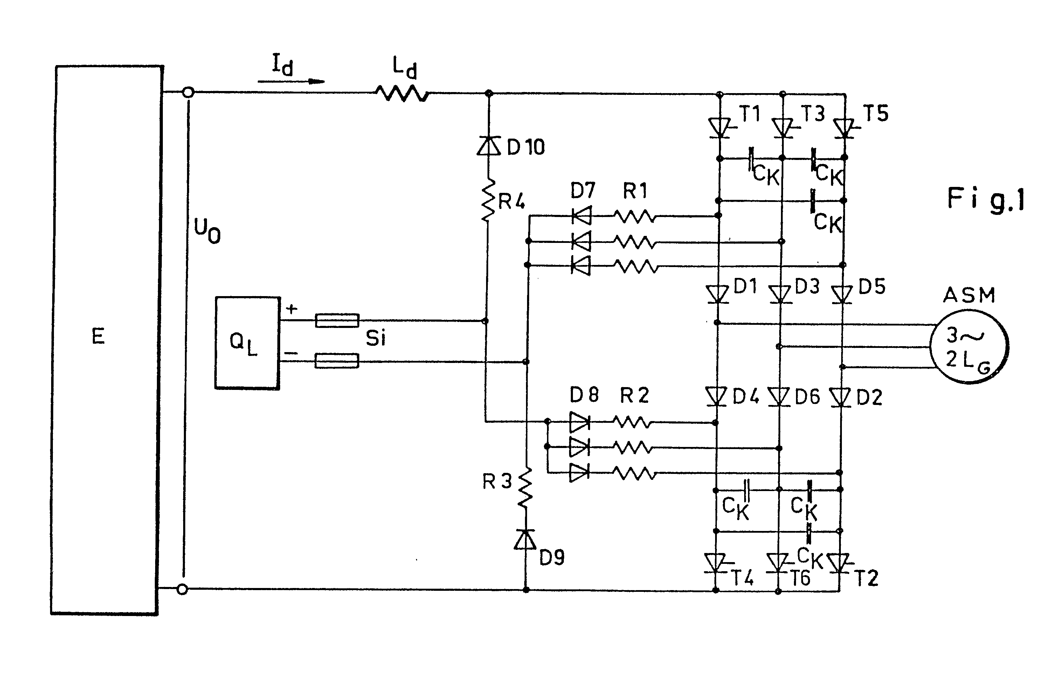

Fig. 1   einen Umrichter mit einem Wechselrichter in Drehstrom-Brückenschaltung mit Phasenfolgelöschung und mit angeschlossener Ladeeinrichtung für die Kommutierungskondensatoren nach dem Stand der Technik,

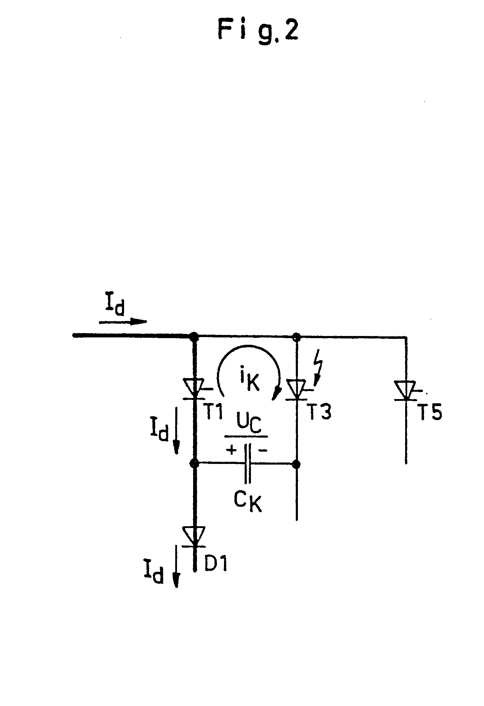

.Fig. 2   einen Ausschnitt aus dem Wechselrichter der Fig. 1 zur Erläuterung der Vorgänge beim erfindungsgemäßen Antaktverfahren,

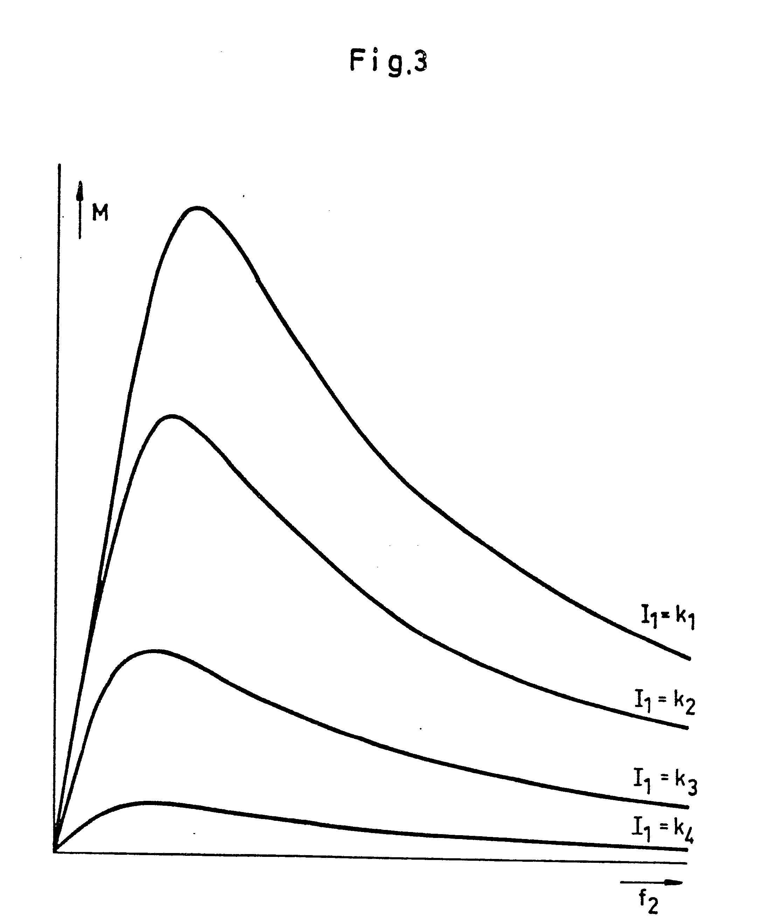

Fig. 3   die Abhängigkeit des Drehmoments M von der Schlupffrequenz $f_2$ für konstante Ständerströme $I_1$.

Fig. 1 zeigt einen Umrichter, bestehend aus einer Einspeisung E, die entweder als Gleichstromsteller oder bei Speisung aus einem Wechselstromnetz als gesteuerter Gleichrichter ausgebildet sein kann, einem Gleichstromzwischenkreis mit einer Zwischenkreisdrossel $L_d$ und einem Wechselrichter WR. Der Wechselrichter WR ist als dreiphasige Drehstrom-Brückenschaltung mit Phasenfolgelöschung ausgebildet. An seinen Drehstromausgängen ist als Verbraucher eine Drehstrom-Asynchronmaschine ASM angeschlossen.

Der Wechselrichter WR besteht aus sechs Thyristoren $T_1 \ldots T_6$. In Serie zu jedem Thyristor $T_1 \ldots T_6$ ist eine Diode $D_1 \ldots D_6$ angeordnet. Zwischen die Verbindungspunkte von Thyristoren und Dioden ist je ein Kommutierungskondensator $C_K$ geschaltet.

Da beim Einschalten des Stromrichters die Kommutierungskondensatoren $C_K$ zunächst ungeladen sind, muß für eine passende Aufladung gesorgt werden. Diesem Zweck dient beim Stand der Technik die Ladespannungsquelle $Q_L$, die über ins-

gesamt acht Widerstände $R_1$, $R_2$, $R_3$, $R_4$ und acht Dioden $D_7$, $D_8$, $D_9$, $D_{10}$ mit den sechs Löschkondensatoren $C_K$ verbunden ist. Die Dioden $D_7$ ... $D_{10}$ entkoppeln die Ladespannungsquelle $Q_L$ im stationären Betrieb vom Wechselrichter WR. In den Zuleitungen von der Ladespannungsquelle $Q_L$ zu den Koppelwiderständen sind außerdem zwei Sicherungen Si vorgesehen.

Die bekannte Ladeeinrichtung für die Kommutierungskondensatoren, die nur beim Einschalten benötigt wird, stellt einen erheblichen Aufwand dar, der Platz benötigt und Gewicht und Kosten verursacht.

Das erfindungsgemäße Verfahren, welches ohne diese zusätzlichen Komponenten im Starkstromteil auskommt, arbeitet folgendermaßen:

Da im allgemeinen Fall während des Antaktens des Wechselrichters der angeschlossene Verbraucher, hier eine Drehstrom-Asynchronmaschine ASM mit resultierender Streuinduktivität $L_\delta$, keine Gegenspannung erzeugt, stellt sich bei der Freigabe des ersten Zündimpulses an das Ventil $T_1$ die für die erste Thyristorlöschung zur Verfügung stehende Kommutierungsspannung $U'_c$ gemäß dem Verhältnis von Lastinduktivität zu Zwischenkreisinduktivität ein:

$$U'_c \approx U_o \cdot \frac{L'}{L_d + L'} \qquad\qquad (1)$$

$L' = 2L_\delta$

$L_\delta \approx L_{\delta 1} + L'_{\delta 2}$

$L_{\delta 1}$, $L'_{\delta 2}$ sind die Streuinduktivitäten der Asynchronmaschine (die Hauptinduktivität $L_h$ kann bei der in Frage kommenden Antaktfrequenz näherungsweise vernachlässigt werden).

$L_d$ ist die Induktivität der Zwischenkreisdrossel,

$U_o$ ist die Ausgangsspannung der Einspeisung E zu Beginn der Stromführung im Wechselrichter.

Da die Spannung $U'_c$ gegenüber den im stationären Betrieb auftretenden Werten relativ klein ist, kann damit nur ein entsprechend kleiner Thyristorstrom kommutiert werden.

Die Zündung des nächsten Ventils $T_3$ muß in einem möglichst kurzen Zeitabstand nach dem Erreichen der theoretisch maximal möglichen Spannung an den Kommutierungskondensatoren erfolgen.

$$t_{opt} = \pi \cdot \sqrt{(L_d \parallel L') \cdot C'} \tag{2}$$

$$C' = 1,5 \cdot C_K$$
($L_d$ und $L'$ liegen parallel)

Die Bedingung der Gleichung 2 bedeutet allgemein, daß der Wechselrichter WR zweckmäßigerweise mit der höchstmöglichen Taktfrequenz betrieben wird. Im weiteren Verlauf des Antaktvorgangs stellt sich bei weiterhin fehlender Gegenspannung am Verbraucher die Höhe der Spannung an den Kommutierungskondensatoren nur in Abhängigkeit vom Zwischenkreisstrom ein.

$$U_c = I_d \cdot \sqrt{\frac{L'}{C'}} \tag{3}$$

Der zulässige Anstieg des Zwischenkreisstromes $I_d$ muß auf solche Werte begrenzt werden, daß der von der jeweils zur Verfügung stehenden Kommutierungsspannung getriebene Kommutierungsstromscheitelwert $i_K$ den im zu löschenden Thyristor fließenden Laststrom $I_d$ überschreitet. Diese Verhältnisse sind in Figur 2 dargestellt. Die Begrenzung des Zwischenkreisstromes $I_d$ erfolgt durch entsprechende Einstellung des Stromsollwertes an einem in dem Einspeiseglied E üblicherweise vorhandenen Stromregler. Die Untergrenze für den Zwischenkreisstrom $I_d$ ist durch die Lückgrenze des Zwischenkreisstromes gegeben.

Sobald nach der eigentlichen Antaktphase mit reduziertem Strom und erhöhter Taktfrequenz die Spannung an den Kommutierungskondensatoren $C_K$ einen quasistationären Wert erreicht hat, wird zunächst der Zwischenkreisstrom $I_d$ zeitverzögert auf den für die Asynchronmaschine ASM erforderlichen Anfahrwert erhöht. Die Beibehaltung der erhöhten Taktfrequenz gewährleistet, daß die Stromerhöhung unter Beachtung von Gleichung 3 durchgeführt werden kann. Erst nach Erreichen des gewünschten Wertes für den Anfahrstrom wird die Taktfrequenz nach einer Zeitfunktion auf solche Frequenzwerte reduziert, die zum Anfahren der Asynchronmaschine ASM geeignet sind.

Das Antaktverfahren funktioniert auch, wenn als Verbraucher nicht eine Asynchronmaschine, sondern ein beliebiger Verbraucher mit gemischt-ohmsch-induktiven Impedanzen Verwendung findet. Die oben anhand der Asynchronmaschine abgeleiteten Gleichungen 1 bis 3, in denen der ohmsche Anteil der Impedanzen vernachlässigt wurde, müssen dann entsprechend angepaßt werden.

Fig. 3 zeigt in einem rechtwinkligen Koordinatensystem die Abhängigkeit des Drehmomentes M einer Asynchronmaschine von der Schlupffrequenz $f_2$ bei konstanten Strömen. Die Kurven entsprechen grundsätzlich den Kurven, die sich bei konstanter Speisespannung einstellen, jedoch sind die Kipppunkte zu kleineren Werten der Schlupffrequenz $f_2$ verschoben. Bei den hohen Schlupffrequenzwerten und dem auf kleine Werte begrenzten Strom während des Anfahrens wird nur ein kleines Moment erzeugt, das im allgemeinen nicht ausreicht, die Asynchronmaschine zu starten.

A n s p r ü c h e

1. Verfahren zum Antakten eines drei- oder mehrphasigen Stromrichters in Brücken- oder Mittelpunktschaltung mit Phasenfolgelöschung, der einen mittels eines Gleichstromstellers bzw. gesteuerten Gleichrichters und einer Zwischenkreisdrossel erzeugten, eingeprägten Gleichstrom einem elektrischen Verbraucher in der Weise zuführt, daß dort ein drei- oder mehrphasiges Wechselstromsystem gebildet wird, dadurch gekennzeichnet, daß zunächst der Wechselrichter (WR) mit erhöhter Frequenz getaktet und gleichzeitig der eingeprägte Zwischenkreisstrom ($I_d$) auf einen kleinen Wert begrenzt wird und daß anschließend der eingeprägte Zwischenkreisstrom ($I_d$) auf den gewünschten Anfahrstrom erhöht und die Taktfrequenz des Wechselrichters (WR) auf die optimale Anfahrfrequenz reduziert wird, sobald die Spannung ($U_{CK}$) auf den Kommutierungskondensatoren ($C_K$) eine ausreichende Höhe erreicht hat.

2. Verfahren nach Anspruch 1, dadurch gekennzeichnet, daß der Wechselrichter (WR) mit der höchsten Frequenz angetaktet wird, die die Wechselrichtersteuerung erzeugen kann.

3. Verfahren nach Anspruch 1 oder 2, dadurch gekennzeichnet, daß während des Antaktens der Zwischenkreisstrom ($I_d$) auf einen Wert geringfügig oberhalb der Lückgrenze begrenzt wird.

4. Verfahren nach Anspruch 1, 2 oder 3, dadurch gekennzeichnet, daß nach Erreichen einer ausreichenden Spannung auf den Kommutierungskondensatoren ($C_K$) der Zwischenkreisstrom ($I_d$) zeitverzögert erhöht wird.

665/79 — 2 — 2003.11918

5. Verfahren nach Anspruch 4, dadurch gekennzeichnet, daß nach Erreichen des Anfahrstromwertes die Taktfrequenz nach einer Zeitfunktion reduziert wird.

6. Verfahren nach Anspruch 4, dadurch gekennzeichnet, daß die Taktfrequenz gleichzeitig mit der Erhöhung des Zwischenkreisstromes reduziert wird.

Fig.1

# Fig.2

$I_d$

$i_K$

T1  $U_C$  + ‖ −  T3  T5

$I_d$

$C_K$

$I_d$  D1

Fig.3

$I_1 = k_1$

$I_1 = k_2$

$I_1 = k_3$

$I_1 = k_4$

$M$

$f_2$